# EUROPÄISCHE PATENTSCHRIFT

(11) **EP 3 869 076 B1**
(45) Veröffentlichungstag und Bekanntmachung des Hinweises auf die Patenterteilung: **16.10.2024**
(21) Anmeldenummer: 21158212.7
(22) Anmeldetag: 19.02.2021
(51) Int. Cl.: F16L 11/12, F16L 33/30

(54) **SCHLAUCHVERBINDUNG MIT ANGEPASSTER AUFSCHUBKRAFT**
HOSE CONNECTION WITH ADAPTED PUSH-ON FORCE
RACCORDEMENT DU TUYAU À FORCE DE POUSSÉE ADAPTÉE

(30) Priorität: 21.02.2020 DE 102020202240
(43) Veröffentlichungstag der Anmeldung: 25.08.2021
(73) Patentinhaber: ContiTech Techno-Chemie GmbH, 61184 Karben (DE)
(72) Erfinder: Fassl, Holger, verstorben (DE)
(74) Vertreter: Continental Corporation

(56) Entgegenhaltungen:
- EP-A1- 1 835 220
- WO-A1-2014/124079
- DE-A1- 2 945 560
- DE-U1- 202011 102 083
- FR-A1- 2 318 375
- GB-A- 2 153 028
- JP-A- H06 190 974
- US-A1- 2010 109 319
- US-A1- 2017 191 592
- US-B1- 10 436 354

## Beschreibung

Die vorliegende Erfindung betrifft eine Schlauchverbindung mit einem Schlauch und einem Stutzen.

In Kraftfahrzeugen und einer Vielzahl von anderen Systemen kommen Schlauchverbindungen zum Einsatz, bei denen ein Schlauch auf einen zugehörigen Stutzen aufgeschoben wird. Beispielsweise werden derartige Schlauchverbindungen bei Ladeluftsystemen in Kraftfahrzeugen mit einem Turbolader verwendet. Das Ladeluftsystem dient dabei dazu, über einen auf einen Stutzen aufgeschobenen Ladeluftschlauch druckerhöhte Luft vom Turbolader zur Saugseite des Motors zu befördern.

Bei den genannten Schlauchverbindungen muss sichergestellt sein, dass sich der Schlauch im Betrieb nicht versehentlich vom Stutzen löst. Ein erster Ansatz besteht darin, dass ein elastischer Schlauch auf den Stutzen aufgeschoben wird. Der Innendurchmesser des Schlauches ist dabei geringfügig kleiner als der Außendurchmesser des Stutzens, sodass eine Presspassung realisiert wird. Der Anpressdruck ergibt sich aus dem Innendurchmesser des Schlauches und dem Außendurchmesser des Stutzens. Zwar ist ein hoher Anpressdruck in Hinblick auf eine sichere Verbindung wünschenswert, allerdings erhöht sich mit dem Anpressdruck auch die erforderliche Aufschubkraft, was gegebenenfalls die Montage erschweren kann.

Um auch bei niedrigen Aufschubkräften und damit einhergehend einem niedrigen Anpressdruck eine sichere Schlauchverbindung zu gewährleisten, kann eine Befestigungsschelle genutzt werden. Die Befestigungsschelle dient dazu, das elastische Material des Schlauches gegen die Außenseite des Stutzens zu drücken und so ein Abrutschen des Schlauches vom Stutzen zu verhindern. Die Verwendung einer Befestigungsschelle hat allerdings den Nachteil, dass ein zusätzlicher Montageschritt erforderlich ist.

Eine weitere Möglichkeit zur Erhöhung der Haltekräfte besteht darin, dass die Außenseite des Stutzens mit einer oder mehreren Halterippen versehen wird.

In diesem Zusammenhang beschreibt DE 10 2014 119 597 A1 einen Schlauchstutzen, auf den ein Schlauch aufsetzbar ist. Dabei umfasst der Schlauchstutzen eine Öffnung und einen Halteabschnitt zum Halten des Schlauches auf dem Schlauchstutzen. Der Halteabschnitt weist eine Mehrzahl von Halterippen auf, wobei eine erste Halterippe der Mehrzahl von Halterippen näher an der Öffnung angeordnet ist als die übrigen Halterippen der Mehrzahl von Halterippen, die eine zweite Halterippe umfassen, und wobei die erste Halterippe der Mehrzahl von Halterippen eine geringere Höhe als die zweite Halterippe der Mehrzahl von Halterippen aufweist.

Allerdings hat sich gezeigt, dass bei den bekannten Schlauchverbindungen oftmals Aufschubkräfte bei der Montage aufzubringen sind, die höher sind als die von den Kunden in Hinblick auf Ergonomievorgaben gewünschten Aufschubkräfte.

Aus der US 2017/191592 A1 und der WO 2014/124079 A1 sind diverse Stutzengeometrien mit radial nach außen vorstehenden Rippen bekannt, die einen auf den Stutzen aufgeschobenen Schlauch radial elastisch deformieren.

Es ist eine Aufgabe der vorliegenden Erfindung, Lösungen für eine Schlauchverbindung bereitzustellen, die eine Anpassung der für das Herstellen der Schlauchverbindung erforderlichen Aufschubkräfte ermöglichen.

Diese Aufgabe wird durch eine Schlauchverbindung mit den Merkmalen des Anspruchs 1 gelöst.

Bevorzugte Ausgestaltungen der Erfindung sind Gegenstand der abhängigen Ansprüche.

Gemäß einem ersten Aspekt der Erfindung hat ein Schlauch zum Aufschieben auf einen Stutzen der Schlauchverbindung einen Außendurchmesser und einen Innendurchmesser. Der Schlauch weist dabei in einem Aufschubbereich zumindest einen Klemmabschnitt mit einem reduzierten Innendurchmesser auf, der kleiner ist als ein Außendurchmesser des Stutzens.

Während beim Stand der Technik über die gesamte Länge des Aufschubbereichs eine Überdeckung zwischen Schlauch und Stutzen vorliegt, ist dies bei der erfindungsgemäßen Lösung lediglich im Bereich eines Klemmabschnitts des Schlauches der Fall. Die Länge des Klemmabschnitts ist dabei kleiner als die Länge des Aufschubbereichs. Auf diese Weise werden die für die Montage aufzubringenden Aufschubkräfte reduziert, ohne dabei die Verbindung zwischen Schlauch und Stutzen zu schwächen. Selbstverständlich können anstelle eines einzelnen Klemmabschnitts auch mehrere Klemmabschnitte realisiert werden.

Erfindungsgemäß ist der Innendurchmesser des Schlauches der Schlauchverbindung größer als ein Außendurchmesser des Stutzens im Aufschubbereich. Auf diese Weise wird sichergestellt, dass die aufzubringende Aufschubkraft im Wesentlichen durch den Klemmabschnitt verursacht wird.

Gemäß einem Aspekt der Erfindung ist in einem Übergangsbereich ein gradueller Übergang zwischen dem Innendurchmesser und dem reduzierten Innendurchmesser ausgestaltet. Ein solcher gradueller Übergang reduziert das Risiko von Beschädigungen des Klemmabschnitts beim Aufschieben des Schlauches auf den Stutzen oder beim Abziehen des Schlauches vom Stutzen, die gegebenenfalls durch eine steile Flanke des Klemmabschnitts verursacht werden könnten.

Gemäß einem Aspekt der Erfindung ist der reduzierte Innendurchmesser so gewählt, dass im Aufschubbereich nur der Klemmabschnitt Kontakt mit dem Stutzen hat. Auf diese Weise wird erreicht, dass außerhalb des zumindest einen Klemmabschnitts ein Spalt zwischen dem Schlauch und dem Stutzen ausgebildet wird. Der Spalt kann beispielsweise eine radiale Ausdehnung von 0,5 mm aufweisen. Dies ermöglicht es, die aufzubringenden Aufschubkräfte sehr genau auf ein gewünschtes Maß einzustellen.

Gemäß einem Aspekt der Erfindung ist eine Länge des Klemmabschnitts so gewählt, dass eine vorgegebene Aufschubkraft zum Aufschieben des Schlauches auf den Stutzen erzielt wird. Insbesondere wenn zwischen dem Schlauch und dem Stutzen ein Spalt ausgebildet wird, wird die Aufschubkraft im Wesentlichen durch den Klemmabschnitt verursacht. Durch eine Anpassung der Länge des Klemmabschnitts lässt sich dann die Aufschubkraft auf einen gewünschten Wert einstellen.

Gemäß einem weiteren Aspekt der Erfindung hat ein Stutzen zum Aufschieben eines Schlauches einen Außendurchmesser und einem Innendurchmesser. Der Stutzen weist dabei in einem Aufschubbereich zumindest einen Klemmabschnitt mit einem vergrößerten Außendurchmesser auf, der größer ist als ein Innendurchmesser des Schlauches.

Vorzugsweise wird eine erfindungsgemäße Schlauchverbindung in einem Kraftfahrzeug genutzt, beispielsweise in einem Personenkraftwagen oder in einem Nutzfahrzeug, z.B. in einem Lastkraftwagen, einem Bus oder einer Baumaschine. Insbesondere kann die erfindungsgemäße Lösung für die Verbindung mit einer Ladeluftleitung genutzt werden.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch eine Schlauchverbindung gemäß dem Stand der Technik;
- Fig. 2: zeigt schematisch eine Schlauchverbindung unter Verwendung eines erfindungsgemäßen Schlauches mit einem Klemmabschnitt;
- Fig. 3: zeigt schematisch eine Schlauchverbindung unter Verwendung eines erfindungsgemäßen Schlauches mit zwei Klemmabschnitten;
- Fig. 4: zeigt schematisch einen Klemmabschnitt des Schlauches mit angrenzenden Übergangsbereichen;
- Fig. 5: zeigt schematisch eine Schlauchverbindung unter Verwendung eines Stutzens mit einem Klemmabschnitt;
- Fig. 6: zeigt schematisch eine Schlauchverbindung unter Verwendung eines Stutzens mit zwei Klemmabschnitten;
- Fig. 7: zeigt schematisch einen Klemmabschnitt des Stutzens mit angrenzenden Übergangsbereichen, und
- Fig. 8: zeigt schematisch eine Schlauchverbindung unter Verwendung eines erfindungsgemäßen Schlauches und eines Stutzens mit je einem Klemmabschnitt.

### Figurenbeschreibung

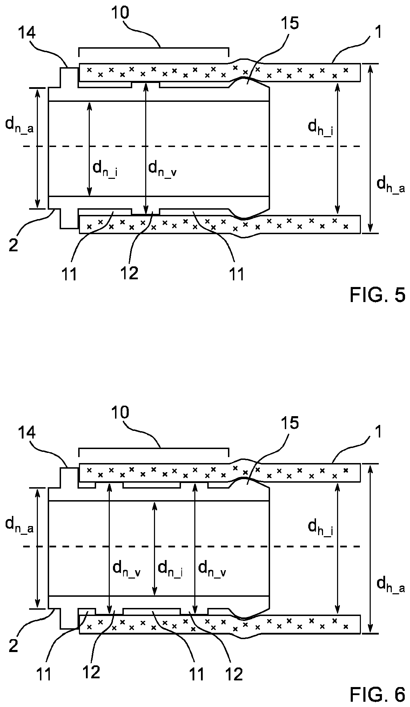

Zum besseren Verständnis der Prinzipien der vorliegenden Erfindung werden nachfolgend Ausführungsformen der Erfindung anhand der Figuren detaillierter erläutert. Die Ausführungsformen der Figuren 5 und 6 fallen nicht unter den Wortlaut der Ansprüche, werden aber als das Verständnis der Erfindung erleichternd angesehen. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

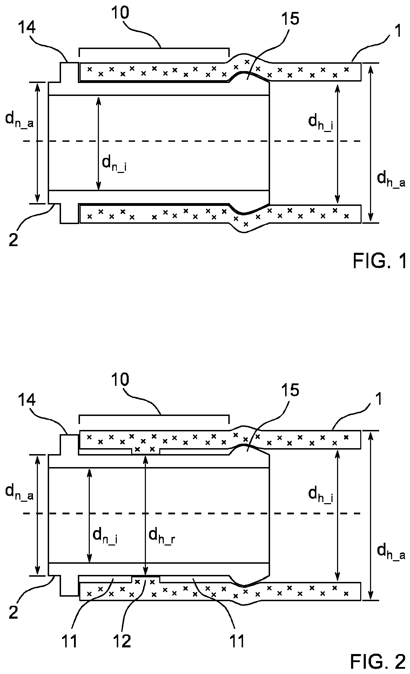

Fig. 1 zeigt schematisch eine Schlauchverbindung gemäß dem Stand der Technik. Dargestellt ist, wie auch in den weiteren Figuren, ein Schnitt in axialer Richtung. Die Schlauchverbindung umfasst einen Schlauch 1, der auf einen Stutzen 2 aufgeschoben ist. Der Schlauch 1 hat einen Innendurchmesser d_{h_i} und einen Außendurchmesser d_{h_a}. Der Stutzen 2 hat einen Innendurchmesser d_{n_i} und einen Außendurchmesser d_{n_a}, der etwas größer ist als der Innendurchmesser d_{h_i} des Schlauches 1. Auf diese Weise wird eine Presspassung realisiert. Zur Begrenzung der axialen Strecke, über die der Schlauch 1 auf den Stutzen 2 aufgeschoben werden kann, weist der Stutzen 2 einen Anschlag 14 auf, der vorzugsweise in Umfangsrichtung ringförmig ausgestaltet ist. Wenn der Schlauch 1 vollständig auf den Stutzen 2 aufgeschoben ist, liegt die Stirnseite des Schlauches 1 am Anschlag 14 an. Zusätzlich ist am vorderen Ende des Stutzens 2 eine ringförmige Halterippe 15 angeordnet, die der Erhöhung der Haltekräfte dient. Der Bereich vom Anschlag 14 bis zum rückseitigen Ende der Halterippe 15 wird nachfolgend als Aufschubbereich 10 bezeichnet. Im Aufschubbereich 10 kann eine in Fig. 1 nicht dargestellte Befestigungsschelle angeordnet werden, um den Schlauch 1 auf dem Stutzen 2 zu fixieren. Dazu wird die Befestigungsschelle zusammengedrückt, sodass sie sich an den Schlauch 1 und damit auch an den Stutzen 2 anlegt. Geeignete Befestigungsschellen sind dem Fachmann bekannt.

Fig. 2 zeigt schematisch eine Schlauchverbindung unter Verwendung eines erfindungsgemäßen Schlauches 1 mit einem Klemmabschnitt 12. Der Stutzen 2 hat einen Innendurchmesser d_{n_i} und einen Außendurchmesser d_{n_a}. Der Schlauch 1 hat einen Außendurchmesser d_{h_a} und einen Innendurchmesser d_{h_i}, der in diesem Fall etwas größer ist als der Außendurchmesser d_{n_a} des Stutzens 2. Lediglich in einem Klemmabschnitt 12 weist der Schlauch 1 einen reduzierten Innendurchmesser d_{h_r} auf, der kleiner ist als der Außendurchmesser d_{n_a} des Stutzens 2. Auf diese Weise wird für den Klemmabschnitt 12 eine Presspassung realisiert. Der Umstand, dass der Schlauch 1 im Bereich des Klemmabschnitts 12 leicht in radialer Richtung gedehnt ist, ist in Fig. 2 der Einfachheit halber nicht dargestellt. Wie schon in Fig. 1 weist der Stutzen 2 einen Anschlag 14 und eine ringförmige Halterippe 15 auf. Der Aufschubbereich 10 erstreckt sich, wie schon in Fig. 1, vom Anschlag 14 bis zum rückseitigen Ende der Halterippe 15. Ein Kontakt zwischen dem Schlauch 1 und dem Stutzen 2 besteht innerhalb des Aufschubbereichs 10 lediglich im Bereich des Klemmabschnitts 12. Außerhalb des Klemmabschnitts 12 ist ein Spalt 11 zwischen dem Schlauch 1 und dem Stutzen 2 ausgebildet. Der Spalt 11 kann beispielsweise eine radiale Ausdehnung von 0,5 mm haben. Der Schlauch 1 besteht vorzugsweise aus einem elastischen Material, beispielsweise aus einem Elastomer oder aus Silikon. Z.B. kann es sich bei dem Elastomer um Polyacrylat-Kautschuk (ACM) oder Ethylen-Acrylat-Kautschuk (AEM) handeln. Der Stutzen 2 kann beispielsweise aus Metall bestehen. Alternativ kann es sich beim Stutzen 2 um ein Spritzgussformteil oder ein Kunststoffformteil handeln. Geeignete Kunststoffe sind dem Fachmann bekannt, z.B. Polyamid (PA), Polyphthalamid (PPA) oder Polyphenylensulfid (PPS).

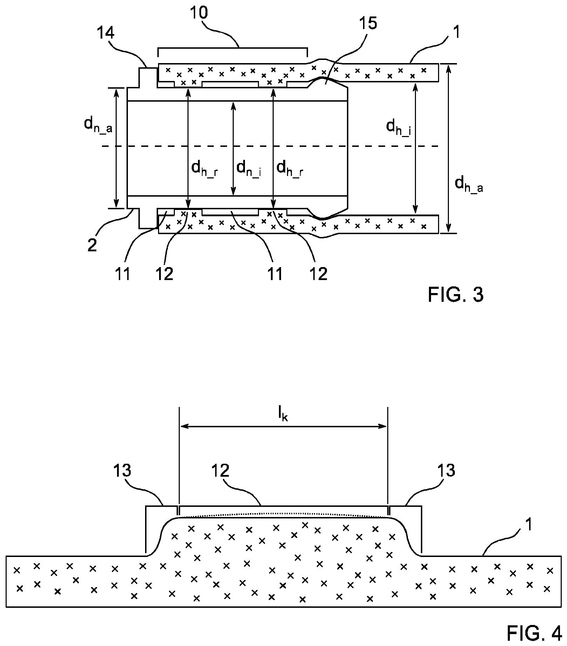

Fig. 3 zeigt schematisch eine Schlauchverbindung unter Verwendung eines erfindungsgemäßen Schlauches 1 mit zwei Klemmabschnitten 12. Die Schlauchverbindung ist im Wesentlichen identisch mit der in Fig. 2 dargestellten Schlauchverbindung.

Allerdings weist der Schlauch 1 zwei voneinander beabstandete Klemmabschnitte 12 auf. Selbstverständlich können auch mehr als zwei Klemmabschnitte 12 realisiert werden. Im dargestellten Beispiel haben beide Klemmabschnitte 12 den gleichen reduzierten Innendurchmesser d_{h_r}. Natürlich ist es ebenso möglich, für die verschiedenen Klemmabschnitte 12 unterschiedliche reduzierte Innendurchmesser d_{h_r} zu realisieren.

Fig. 4 zeigt schematisch einen Klemmabschnitt 12 des Schlauches 1 mit angrenzenden Übergangsbereichen 13. Grundsätzlich ist es möglich, die Flanken des Klemmabschnitts 12 als im Wesentlichen senkrechte Flanken auszubilden. Um aber das Risiko von Beschädigungen des Klemmabschnitts 12 beim Aufschieben des Schlauches 1 auf den Stutzen oder beim Abziehen des Schlauches 1 vom Stutzen zu reduzieren, können angrenzend an den Klemmabschnitt 12 Übergangsbereiche 13 realisiert werden, in denen ein gradueller Übergang zwischen dem Innendurchmesser und dem reduzierten Innendurchmesser erfolgt. Die Länge lₖ des Klemmabschnitts 12 ist so gewählt, dass eine vorgegebene Aufschubkraft zum Aufschieben des Schlauches 1 auf den Stutzen erzielt wird. Die Länge der Übergangsbereiche 13 sowie der Verlauf des Übergangs liegt im Ermessen des Fachmanns. In Fig. 4 erfolgt ausgehend vom Innendurchmesser zunächst eine langsame Änderung des Durchmessers, die dann in eine schnelle Änderung übergeht. Schließlich ändert sich der Durchmesser wieder langsamer, bis der reduzierte Innendurchmesser erreicht ist. Der reduzierte Innendurchmesser im Bereich des Klemmabschnitts 12 ist in Fig. 4 konstant. Der reduzierte Innendurchmessers kann alternativ auch über die Länge des Klemmabschnitts 12 variieren. Dies ist durch die gestrichelte Linie angedeutet.

Fig. 5 zeigt schematisch eine Schlauchverbindung unter Verwendung eines Stutzens 2 mit einem Klemmabschnitt 12. Der Schlauch 1 hat einen Außendurchmesser d_{h_a} und einen Innendurchmesser d_{h_i}. Der Stutzen 2 hat einen Innendurchmesser d_{n_i} und einen Außendurchmesser d_{n_a}, der in diesem Fall etwas kleiner ist als der Innendurchmesser d_{h_i} des Schlauches 1. Lediglich in einem Klemmabschnitt 12 weist der Stutzen 2 einen vergrößerten Außendurchmesser d_{n_v} auf, der größer ist als der Innendurchmesser d_{n_i} des Schlauches 1. Auf diese Weise wird für den Klemmabschnitt 12 eine Presspassung realisiert. Der Umstand, dass der Schlauch 1 durch den Klemmabschnitt 12 leicht in radialer Richtung gedehnt ist, ist in Fig. 5 der Einfachheit halber nicht dargestellt. Der Stutzen 2 weist wie schon zuvor einen Anschlag 14 sowie am vorderen Ende eine ringförmige Halterippe 15 auf. Der Aufschubbereich 10 erstreckt sich vom Anschlag 14 bis zum rückseitigen Ende der Halterippe 15. Ein Kontakt zwischen dem Schlauch 1 und dem Stutzen 2 besteht innerhalb des Aufschubbereichs 10 lediglich im Bereich des Klemmabschnitts 12. Außerhalb des Klemmabschnitts 12 ist ein Spalt 11 zwischen dem Schlauch 1 und dem Stutzen 2 ausgebildet.

Fig. 6 zeigt schematisch eine Schlauchverbindung unter Verwendung eines Stutzens 2 mit zwei Klemmabschnitten 12. Die Schlauchverbindung ist im Wesentlichen identisch mit der in Fig. 5 dargestellten Schlauchverbindung. Allerdings weist der Stutzen 2 zwei voneinander beabstandete Klemmabschnitte 12 auf. Selbstverständlich können auch mehr als zwei Klemmabschnitte 12 realisiert werden. Im dargestellten Beispiel haben beide Klemmabschnitte 12 den gleichen vergrößerten Außendurchmesser d_{n_v}. Natürlich ist es ebenso möglich, für die verschiedenen Klemmabschnitte 12 unterschiedliche vergrößerte Außendurchmesser d_{n_v} zu realisieren.

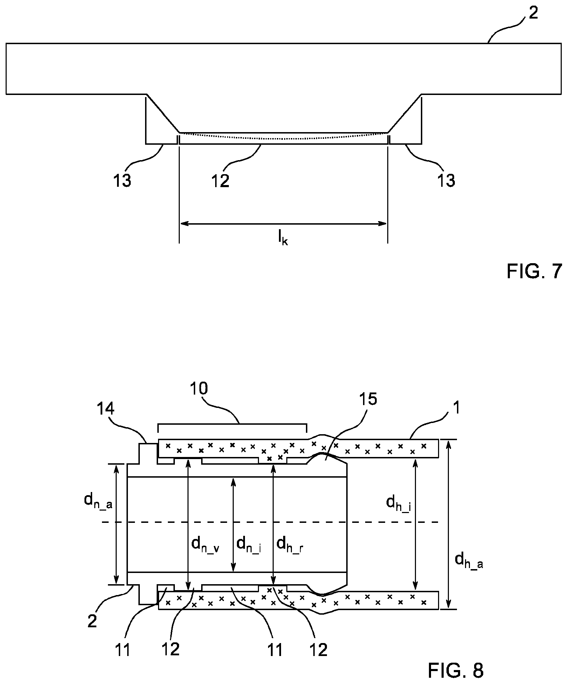

Fig. 7 zeigt schematisch einen Klemmabschnitt 12 des Stutzens 2 mit angrenzenden Übergangsbereichen 13. Wie schon für den Schlauch beschrieben, können die Flanken des Klemmabschnitts 12 des Stutzens 2 als im Wesentlichen senkrechte Flanken umgesetzt werden. Um aber das Risiko von Beschädigungen des Schlauches 1 beim Aufschieben des Schlauches 1 auf den Stutzen oder beim Abziehen des Schlauches 1 vom Stutzen zu reduzieren, können wiederum angrenzend an den Klemmabschnitt 12 Übergangsbereiche 13 realisiert werden, in denen ein gradueller Übergang zwischen dem Innendurchmesser und dem reduzierten Innendurchmesser erfolgt. Die Länge der Übergangsbereiche 13 sowie der Verlauf des Übergangs liegt dabei im Ermessen des Fachmanns. In Fig. 7 ist der Übergang als linearer Übergang ausgestaltet. Der vergrößerte Außendurchmesser im Bereich des Klemmabschnitts 12 ist in Fig. 7 konstant. Der vergrößerte Außendurchmesser kann alternativ auch über die Länge des Klemmabschnitts 12 variieren. Dies ist durch die gestrichelte Linie angedeutet.

Fig. 8 zeigt schematisch eine Schlauchverbindung unter Verwendung eines erfindungsgemäßen Schlauches 1 und eines Stutzens 2 mit je einem Klemmabschnitt 12. Bei den bisherigen Beispielen wies jeweils nur der Schlauch 1 oder nur der Stutzen 2 zumindest einen Klemmabschnitt 12 auf. Es lassen sich aber auch beide Möglichkeiten kombinieren. Dies ist in Fig. 8 dargestellt. Der Stutzen weist in diesem Fall einen Klemmabschnitt 12 mit einem vergrößerten Außendurchmesser d_{n_v} auf, der größer ist als der Innendurchmesser d_{h_i} des Schlauches 1. Zusätzlich weist auch der Schlauch 1 einen Klemmabschnitt 12 mit einem reduzierten Innendurchmesser d_{h_r} auf, der kleiner ist als der Außendurchmesser d_{n_a} des Stutzens 2. In beiden Klemmabschnitten 12 wird eine Presspassung realisiert. Angrenzend an die Klemmabschnitte 12 können wiederum Übergangsbereiche 13 vorgesehen sein, die in Fig. 8 nicht dargestellt sind.

### Bezugszeichenliste

- 1: Schlauch
- 2: Stutzen
- 10: Aufschubbereich
- 11: Spalt
- 12: Klemmabschnitt
- 13: Übergangsbereich
- 14: Anschlag
- 15: Halterippe
- d_{h_a}: Außendurchmesser des Schlauches
- d_{h_i}: Innendurchmesser des Schlauches
- d_{h_r}: Reduzierter Innendurchmesser des Schlauches
- d_{n_a}: Außendurchmesser des Stutzens
- d_{n_i}: Innendurchmesser des Stutzens
- d_{n_v}: Vergrößerter Außendurchmesser des Stutzens
- lₖ: Länge des Klemmabschnitts

## Patentansprüche

1. Schlauchverbindung mit einem Schlauch (1) und einem Stutzen (2), wobei der Schlauch (1) einen Außendurchmesser (d_{h_a}) und einen Innendurchmesser (d_{h_i}) hat, wobei der Innendurchmesser (d_{h_i}) des Schlauches größer ist als ein Außendurchmesser (d_{n_a}) des Stutzens (2) in einem Aufschubbereich (10),
**dadurch gekennzeichnet, dass**
der Schlauch (1) im Aufschubbereich (10) zumindest einen Klemmabschnitt (12) mit einem reduzierten Innendurchmesser (d_{h_r}) aufweist, der kleiner ist als der Außendurchmesser (d_{n_a}) des Stutzens (2), so dass für den Klemmabschnitt (12) eine Presspassung realisiert wird.

2. Schlauchverbindung gemäß Anspruch 1, wobei in einem Übergangsbereich (13) ein gradueller Übergang zwischen dem Innendurchmesser (d_{h_i}) und dem reduzierten Innendurchmesser (d_{h_r}) ausgestaltet ist.

3. Schlauchverbindung gemäß Anspruch 1 oder 2, wobei der reduzierte Innendurchmesser (d_{h_r}) so gewählt ist, dass im Aufschubbereich (10) nur der Klemmabschnitt (12) Kontakt mit dem Stutzen (2) hat.

4. Schlauchverbindung gemäß einem der vorherigen Ansprüche, wobei eine Länge (lₖ) des Klemmabschnitts (12) so gewählt ist, dass eine vorgegebene Aufschubkraft zum Aufschieben des Schlauches (1) auf den Stutzen (2) erzielt wird.

## Claims

1. Hose connection with a hose (1) and with a connector (2), wherein the hose (1) has an outer diameter (d_{h_a}) and an inner diameter (d_{h_i}), wherein the inner diameter (d_{h_i}) of the hose is greater than an outer diameter (d_{n_a}) of the connector (2) in a pushing-on region (10),
**characterized in that**
the hose (1) has in the pushing-on region (10) at least one clamping portion (12) with a reduced inner diameter (d_{h_r}) which is smaller than the outer diameter (d_{n_a}) of the connector (2), so that a press fit is realized for the clamping portion (12).

2. Hose connection according to Claim 1, wherein, in a transition region (13), there is formed a gradual transition between the inner diameter (d_{h_i}) and the reduced inner diameter (d_{h_r}).

3. Hose connection according to Claim 1 or 2, wherein the reduced inner diameter (d_{h_r}) is selected in such a way that, in the pushing-on region (10), only the clamping portion (12) is in contact with the connector (2).

4. Hose connection according to one of the preceding claims, wherein a length (lₖ) of the clamping portion (12) is selected in such a way that a predefined pushing-on force for pushing the hose (1) onto the connector (2) is achieved.

## Revendications

1. Raccord de tuyau avec un tuyau (1) et un embout (2), le tuyau (1) ayant un diamètre extérieur (d_{h_a}) et un diamètre intérieur (d_{h_i}), le diamètre intérieur (d_{h_i}) du tuyau étant plus grand qu'un diamètre extérieur (d_{n_a}) de l'embout (2) dans une zone d'enfilage (10),
**caractérisé en ce que**
le tuyau (1) présente dans la zone d'enfilage (10) au moins une section de serrage (12) avec un diamètre intérieur réduit (d_{h_r}) qui est plus petit que le diamètre extérieur (d_{n_a}) de l'embout (2), de telle sorte qu'un ajustement serré est réalisé pour la section de serrage (12).

2. Raccord de tuyau selon la revendication 1, dans lequel une transition graduelle entre le diamètre intérieur (d_{h_i}) et le diamètre intérieur réduit (d_{h_r}) est réalisée dans une zone de transition (13).

3. Raccord de tuyau selon la revendication 1 ou 2, dans lequel le diamètre intérieur réduit (d_{h_r}) est choisi de telle sorte que, dans la zone d'enfilage (10), seule la section de serrage (12) est en contact avec l'embout (2).

4. Raccord de tuyau selon l'une quelconque des revendications précédentes, dans lequel une longueur (lₖ) de la section de serrage (12) est choisie de manière à obtenir une force d'enfilage prédéterminée pour enfiler le tuyau (1) sur l'embout (2).
